# EUROPÄISCHE PATENTSCHRIFT

(11) **EP 3 368 392 B1**
(45) Veröffentlichungstag und Bekanntmachung des Hinweises auf die Patenterteilung: **04.12.2019**
(21) Anmeldenummer: 16784516.3
(22) Anmeldetag: 21.10.2016
(51) Int. Cl.: B62D 1/16, B60Q 1/42

(54) **LENKSÄULE FÜR EIN KRAFTFAHRZEUG UND VERFAHREN ZUR HERSTELLUNG EINER LENKSÄULE**
STEERING COLUMN FOR A MOTOR VEHICLE AND METHOD FOR PRODUCING A STEERING COLUMN
COLONNE DE DIRECTION POUR VÉHICULE À MOTEUR ET PROCÉDÉ DE FABRICATION D'UNE COLONNE DE DIRECTION

(30) Priorität: 27.10.2015 DE 102015220934
(43) Veröffentlichungstag der Anmeldung: 05.09.2018
(73) Patentinhaber: ThyssenKrupp Presta AG, 9492 Eschen (LI); thyssenkrupp AG, 45143 Essen (DE)
(72) Erfinder: MASSONNAUD, Marcus, 6812 Meningen (AT); GEISELBERGER, Thomas, 9008 St. Gallen (CH); FLEISCHER, Martin, 9436 Balgach (CH)
(74) Vertreter: thyssenkrupp Intellectual Property GmbH
(86) Internationale Anmeldenummer: PCT/EP2016/075325
(87) Internationale Veröffentlichungsnummer: WO 2017/072032

(56) Entgegenhaltungen:
- EP-A1- 0 533 141
- EP-A2- 0 965 492

## Beschreibung

### Stand der Technik

Die Erfindung betrifft eine Lenksäule für ein Kraftfahrzeug, mit einer in einer Manteleinheit drehbar gelagerten Lenkspindel und einer Schnittstelle zur Anbringung eines relativ zur Manteleinheit feststehenden Lenkstockschalters, und mit einem Übertragungselement, welches über ein Befestigungsmittel mit der Lenkspindel drehmomentschlüssig verbunden ist und zumindest ein Betätigungsmittel aufweist, welches in Wirkeingriff bringbar ist mit dem an der Schnittstelle angebrachten Lenkstockschalter.

In einem Kraftfahrzeug dient die Lenksäule in erster Linie zur Übertragung von Lenkbefehlen von dem am hinteren Ende der Lenkspindel angebrachten Lenkrad an das Lenkgetriebe, üblicherweise unter Einkopplung einer Hilfskraft zur Verstärkung des in das Lenkrad eingebrachten Lenkhandmoments. Darüber hinaus dient die Manteleinheit, welche karosserieseitig die drehbare Lagerung der Lenkspindel aufnimmt, üblicherweise als Träger für elektrische Schalt- und Bedienelemente, die während der Fahrt manuell betätigt werden können, wie beispielsweise Blinkerschalter, Fahrlicht- und Scheibenwischerschalter. Hierzu sind zumeist mehrere Schalt- und Bedienelemente in einem Lenkstockschalter zusammengefasst, der als modulartige Baugruppe an der Manteleinheit montiert wird.

Zur Aufnahme des Lenkstockschalters ist an der Manteleinheit eine Schnittstelle ausgebildet, die mit Befestigungseinrichtungen an dem Lenkstockschalter korrespondiert und beispielsweise definierte Anlageflächen, Befestigungselemente und dergleichen aufweisen kann zur lagerichtigen Fixierung des Lenkstockschalters an der Lenksäule. Die Schnittstelle ist bevorzugt so ausgebildet, dass der Lenkstockschalter im Fertigungsablauf an der bereits im Fahrzeug verbauten Lenksäule montiert werden kann.

Bei einer gattungsgemäßen Lenksäule wird an der Schnittstelle nicht nur der Lenkstockschalter mechanisch befestigt, es wird auch eine Drehbewegung der Lenkspindel an den Lenkstockschalter übertragen zur Betätigung von Schaltelementen durch eine Lenkbewegung, etwa einer Rückstelleinrichtung zur selbsttätigen Rückstellung des Blinkerschalters nach einem Abbiegemanöver. Die Übertragung der Drehbewegung erfolgt mittels eines Übertragungselements, welches drehfest mit der Lenkspindel gekuppelt ist und mindestens ein bezüglich der Lenkspindel vorstehendes Betätigungsmittel aufweist, das bei einer Drehung der Lenkspindel mit einem korrespondierenden Schaltelement des an der Schnittstelle angebrachten Lenkstockschalters zusammenwirkt. Beispielsweise kann das Betätigungsmittel einen exzentrischen Nocken oder Zapfen aufweisen, der bei einer Drehung der Lenkspindel einen Schalthebel oder Auslösemechanismus des Lenkstockschalters bewegt.

Im Stand der Technik ist beispielsweise aus der DE 199 20 994 A1 ein Übertragungselement für eine Lenksäule beschrieben. Das darin als Drehverbinder bezeichnete Übertragungselement weist stiftförmige, axial vorstehende Formschlusselemente auf, die formschlüssig mit einem Lenkrad verbunden sind, welches seinerseits drehfest auf der Lenkspindel befestigt ist. Dadurch wird zwar eine drehmomentschlüssige Verbindung mit der Lenkspindel erreicht, nachteilig ist jedoch, dass durch die aufeinanderfolgenden Verbindungen zwischen Übertragungselement und Lenkrad sowie zwischen Lenkrad und Lenkspindel ein hoher Aufwand zur Einhaltung der vorgegebenen Toleranzanforderungen entsteht.

Aus der DE 720 718 ist ebenfalls eine Lenksäule bekannt, mit einem drehmomentschlüssig an der Lenkspindel befestigten Übertragungselement. Dieses wird über ein Befestigungsmittel, nämlich durch eine in das Übertragungselement radial eingeschraubte Klemmschraube auf der Lenkspindel geklemmt. Nachteilig ist dabei, dass das Übertragungselement und das Befestigungsmittel einzeln gefertigt und montiert werden müssen, was einen entsprechenden Herstellungs- und Montageaufwand erfordert. Außerdem hat die darin offenbarte Lenksäule lediglich einen integrierten elektrischen Schaltkontakt, und keine Schnittstelle zur Anbringung eines Lenkstockschalters. Für den Einsatz in modernen Kraftfahrzeugen ist diese Anordnung somit ungeeignet.

Aus der EP 0 533 141 A1, welche die Oberbegriffe der unabhängigen Ansprüche 1 und 9 offenbart, ist eine Lenksäule bekannt, bei der die Lenkspindel einen Nocken aufweist, der einen an einem äußeren Gehäuse angebrachten Blinkerschalter zurückstellen soll.

Aus der EP 0 965 492 A2 ist ein Lenkstockschalter bekannt, mit einem drehbaren und einem festen Teil einer Kabeltrommel. Der feste Teil ist an der Lenksäule befestigt, und der drehbare Teil an dem Lenkrad.

Angesichts der vorangehend erläuterten Problematik ist es eine Aufgabe der vorliegenden Erfindung, eine Lenksäule für ein Kraftfahrzeug der eingangs genannten Art zur Verfügung zu stellen, welche einfacher und kostengünstiger herstellbar und montierbar ist.

### Darstellung der Erfindung

Zur Lösung der vorgenannten Problematik wird erfindungsgemäß vorgeschlagen, dass das Übertragungselement zusammen mit mindestens einem Befestigungsmittel zur drehfesten Verbindung mit der Lenkspindel einteilig ausgebildet ist.

Erfindungsgemäß hat das Übertragungselement einen einteiligen Grundaufbau, in den das oder die Befestigungsmittel einstückig integriert sind. Diese Bauform sieht vor, dass mindestens ein Befestigungsmittel als integraler funktionaler Bestandteil des Übertragungselements ausgebildet ist, der bei der Fertigung unmittelbar an dem Übertragungselements realisiert wird. Die geforderte Funktionalität zur drehfesten, d.h. drehmomentschlüssigen Verbindung mit der Lenkspindel kann auf diese Weise allein durch die Gestaltung des Übertragungselements zur Verfügung gestellt werden, durch eine entsprechende einstückige Formgebung bei der Herstellung. Unter einteilig wird ein einstückiges integrales Bauteil verstanden.

Die erfindungsgemäß einteilige Gestaltung von Übertragungselement und Befestigungsmittel hat den Vorteil, dass keine weiteren Befestigungsmittel wie Schrauben, Klemm- oder Spannelemente separat gefertigt und bereitgestellt werden müssen, wodurch der Herstellungs- und Kostenaufwand reduziert wird. Außerdem entfällt die Verbindung des Befestigungselements mit dem Übertragungselement, wodurch der Arbeits- und Zeitaufwand bei der Fertigung der Lenksäule in vorteilhafter Weise verringert wird.

Besonders geeignet ist die erfindungsgemäße Lösung für Lenksäulen, die mit einem Lenkrad verbunden werden, die ein integriertes Überlagerungsgetriebe, eine sogenanntes Active-Front-Steering, aufweisen. Diese Überlagerungsgetriebe dienen dazu, einen zusätzlichen Lenkwinkel in die Lenkspindel einzutragen.

Es kann vorgesehen sein, dass das Befestigungsmittel zumindest ein Formschlusselement aufweist, das in eine korrespondierende Formschlussaufnahme der Lenkspindel eingreift. Ein Formschlusselement kann einen am Übertragungselement einstückig angeformten, radial und/oder axial vorstehenden Vorsprung, Zapfen oder dergleichen umfassen, der in eine korrespondierende radiale oder axiale Ausnehmung bzw. Einformung in der Lenkspindel eingreift, beispielsweise eine Axialnut, so dass bezüglich einer Bewegung in Umfangsrichtung eine formschlüssige, drehfeste Verbindung hergestellt wird. Eine umgekehrte Anordnung mit einem von der Lenkspindel radial und/oder axial vorstehenden Vorsprung, der in eine korrespondierende Ausnehmung oder Einformung des Befestigungsmittels eingreift, ist ebenfalls möglich, wie auch eine Kombination von Vorsprüngen und Ausnehmungen.

Es ist ebenfalls denkbar und möglich, dass das Befestigungsmittel eine Rändelung oder Profilierung aufweist, welche formschlüssig gegen eine gegengleiche Oberfläche der Lenkspindel anliegt, so dass ein Mikroformschluss gebildet wird. Weiterhin ist es denkbar und möglich, dass das Befestigungsmittel eine axiale Rändelung aufweist und Lenkspindel eine umfangsmässige Rändelung mit zumindest teilweise in Umfangsrichtung umlaufenden Erhebungen umfasst, wobei durch das Aufpressen des Übertragungselements auf die Lenkspindel sich die als Befestigungsmittel ausgebildete axiale Rändelung in die umfangsmässige Rändelung der Lenkspindel einfurcht und somit eine formschlüssige Verbindung zwischen Übertragungselement und Lenkspindel bereitgestellt wird.

Das Befestigungsmittel kann zumindest ein Kraftschlusselement aufweisen, welches reibschlüssig mit der Lenkspindel verbunden ist. Das Kraftschlusselement umfasst eine Oberfläche des Übertragungselements, welche reibschlüssig eine Oberfläche der Lenkspindel kontaktiert, so dass aufgrund der wirkenden Haftreibung eine drehmomentschlüssige Verbindung zwischen Lenkwelle und Übertragungselement hegestellt wird. Ein Kraftschlusselement kann beispielsweise durch eine axiale Durchgangsöffnung bereitgestellt werden, mit der das Übertragungselement in axialer Richtung auf einen Befestigungsabschnitt der Lenkspindel aufgepresst ist.
Das Befestigungsmittel kann einstückig ausgebildete Formschluss- und Kraftschlusselemente in Kombination aufweisen. Der Befestigungsabschnitt der Lenkspindel, auf dem das Übertragungselement befestigt ist, ist bevorzugt mit dem oder den Befestigungsmitteln des Übertragungselements korrespondierend ausgebildet. Damit ist gemeint, dass in dem Befestigungsabschnitt Formschlussaufnahmen und/oder Kraftschlussaufnahmen angeordnet sind, die drehmomentschlüssig mit dem Befestigungsmittel des Übertragungselements verbindbar sind.

Es ist weiterhin möglich, dass das Befestigungsmittel mindestens ein Federelement aufweist. Ein Federelement kann zwischen den Übertragungselement und der Lenkspindel verspannt sein, so dass sich das Übertragungselement elastisch gegen die Lenkspindel abstützt. Die gegen die Oberfläche der Lenkspindel ausgeübte Federkraft kann einen definierten Kraftschluss zwischen Übertragungselement und Lenkspindel bewirken. Außerdem kann eventuell zwischen Übertragungselement und Lenkspindel vorhandenes Spiel ausgeglichen werden, so dass das Übertragungselement in radialer Richtung elastisch fixiert ist, auch wenn die eigentliche drehmomentschlüssige Verbindung über Formschlusselemente erfolgt. Es ist ebenfalls denkbar und möglich, dass ein Federelement ein Formschlusselement im formschlüssigen Eingriff federnd verspannt, so dass ein sicherer und spielfreier Sitz gewährleistet ist. Das Federelement ist bevorzugt einstückig mit dem Übertragungselement ausgebildet. Vorzugsweise ist eine Mehrzahl von Federelementen an dem Übertragungselement angeordnet, die über den Umfang rotationssymmetrisch verteilt radial gegen die äußere Mantelfläche der Lenkspindel elastisch vorgespannt sind. Besonders bevorzugt sind drei Federelemente jeweils um 120° bezüglich des Umfangs der Lenkspindel gegeneinander versetzt angeordnet, so dass das Übertragungselement durch die radialen Federkräfte auf der Lenkspindel zentriert gehalten wird. Alternativ können auch vier, fünf oder sechs Federelemente vorgesehen sein.

Das oder die Federelemente sind bevorzugt einstückig an dem Übertragungselement angeformt, beispielsweise in einem ring- oder rohrförmigen Abschnitt der Befestigungsmittel in Form von geschlitzten Segmenten, so dass Federzungen gebildet werden, die sich federnd gegen die Lenkspindel abstützen können.

In seiner Grundform kann das Übertragungselement ringförmig ausgebildet sein und die Lenkspindel in Umfangsrichtung zumindest teilweise umgreifen. Dadurch wird ein Ring gebildet, der mit seiner Durchgangsöffnung koaxial auf der Lenkspindel angebracht und fixiert ist. Der Ring ist bevorzugt geschlossen und umfasst die Lenkspindel vollständig. Im Bereich der Durchgangsöffnung können das oder die Befestigungsmittel erfindungsgemäß einstückig an dem Ring realisiert sein. Dabei ist mindestens ein Befestigungsmittel auf einer der Außenseite der Lenkspindel zugewandten Fläche des Übertragungselements angeordnet, bevorzugt auf einer Innenfläche der Durchgangsöffnung, welche einer Außenfläche der Lenkspindel gegenüberliegt. Die Innen- und Außenflächen können innere und äußere Mantelflächen umfassen, die sich in radialer Richtung gegenüberliegen, oder auch Stirnflächen des Übertragungselements und der Lenkspindel, die sich in axialer Richtung gegenüberstehen.

Das Übertragungselement kann ein ringförmiges Element in Form einer flachen Ringscheibe umfassen, mit einer zwischen dem Rand der Durchgangsöffnung und dem äußeren Umfang gemessenen radialen Ringbreite, die größer oder gleich ist der Ringdicke in axialer Richtung der Durchgangsöffnung. Im Bereich der Durchgangsöffnung und/oder der Stirnflächen kann ein erfindungsgemäßes Befestigungsmittel einstückig an- oder eingeformt sein. Im radial nach außen vorstehenden Bereich, bevorzugt im äußeren Umfangsbereich, kann mindestens ein Betätigungsmittel angeordnet sein. Das Betätigungsmittel kann beispielsweise eine radial von außen eingeformte Ausnehmung umfassen, in welche ein korrespondierendes Schaltelement eines an der Schnittstelle angebrachten Lenkstockschalters in radialer Richtung formschlüssig eingreift.

Es ist vorteilhaft, dass das Befestigungsmittel eine rohrabschnittförmige Befestigungshülse aufweist. Erfindungsgemäß ist die Befestigungshülse einteilig mit dem Übertragungselement ausgestaltet, beispielsweise einstückig angeformt. Mit ihrer Durchgangsöffnung, die mit dem Querschnitt der Lenkspindel in einem Befestigungsabschnitt korrespondiert, kann die Befestigungshülse koaxial auf der Lenkspindel angeordnet und festgelegt werden. In Bereich ihrer axialen Erstreckung kann die Befestigungshülse als Befestigungsmittel ein oder mehrere Formschlusselemente und/oder Kraftschlusselemente und/oder Federelemente aufweisen, die mit der Lenkspindel verbindbar sind. Bevorzugt sind diese auf der Innenfläche ihrer Durchgangsöffnung angeordnet, so dass sie auf der äußeren Mantelfläche der Lenkspindel festlegbar sind. Beispielsweise kann die ringförmige Befestigungshülse zur Bildung einer kraftschlüssigen Verbindung im Presssitz axial auf die Lenkspindel aufgepresst werden, wobei die axiale Abmessung so groß gewählt wird, dass in Umfangsrichtung eine feste reibschlüssige Verbindung erfolgen kann. Alternativ oder zusätzlich können ein oder mehrere Formschlusselemente an der Befestigungshülse angeordnet sein, die mit korrespondierenden Formschlussaufnahmen an der Lenkspindel in axialer Richtung in Eingriff bringbar sind. Diese Formschlusselemente können beispielsweise ein oder mehrere radial in den Durchgangsquerschnitt vorstehende Vorsprünge umfassen, welche in axialer Richtung in korrespondierende Axialnuten in der äußeren Mantelfläche eingesetzt werden können. Alternativ oder zusätzlich können an der Befestigungshülse ein oder mehrere Federelemente angeordnet sein, die beispielsweise federnd radial nach innen zum Durchgangsquerschnitt vorstehen. Ein Federelement kann beispielsweise dadurch realisiert werden, dass in die rohrförmige Befestigungshülse an einem Ende in Umfangsrichtung mit Abstand zueinander angeordnete axiale Schlitze eingebracht sind, so dass der dazwischen verbleibende Steg eine mit seinem freien Ende elastisch in radialer Richtung bewegliche Blattfeder bzw. Federzunge bildet. Auf diese Weise können auch zwei oder mehr axiale Schlitze über den Umfang verteilt eingebracht werden, so dass die Befestigungshülse über ihren gesamten Umfang segmentiert ist und die Segmente zwischen den Schlitzen eine der Anzahl der Schlitze entsprechende Anzahl von Blattfedern bzw. Federzungen bilden. Dadurch, dass die Federzungen so geformt und bemessen sind, dass sie in unbelastetem Zustand radial nach innen vorstehen, werden sie beim axialen Aufsetzen auf eine Lenkwelle radial nach außen aufgespreizt und liegen unter radialer Vorspannung an einem Befestigungsabschnitt der Lenkwelle an. Dadurch kann ein definierter Kraftschluss zwischen dem Befestigungsmittel des Übertragungselements und der Lenkwelle realisiert werden. Alternativ oder zusätzlich können durch die Federelemente Formschlusselemente wie oben beschrieben federnd gegeneinander vorgespannt werden. Außerdem kann radiales Spiel zwischen dem Übertragungselement und der Lenkspindel ausgeglichen und das Übertragungselement auf der Lenkspindel federnd zentriert gehalten werden.

Die Befestigungshülse kann sich in axialer Richtung von einem Ringelement des Übertragungselements erstrecken, beispielsweise in Form eines Rings oder einer Ringscheibe, wobei das Ringelement in radialer Richtung über die Befestigungshülse vorsteht. Das Ringelement kann bevorzugt an seinem Außenumfang mindestens ein Betätigungsmittel aufweisen, welches beispielsweise eine radial eingeformte Ausnehmung aufweist.

Eine vorteilhafte Ausführung sieht vor, dass das Übertragungselement als Blechformteil ausgebildet ist. Erfindungsgemäß kann ein derartiges Blechformteil einschließlich des oder der Befestigungsmittel besonders rationell durch Stanzen und/oder gegebenenfalls Kaltumformen hergestellt werden, bevorzugt aus Stahlblech oder Federstahlblech. Ein Vorteil dieser Herstellungsmethode ist, dass durch die Umformung die mechanischen Eigenschaften gezielt lokal an die auftretenden Belastungen angepasst werden können, beispielsweise kann durch Einformung von Sicken oder Kanten lokal die Biegesteifigkeit erhöht werden, oder durch Einprägungen die Materialstärke verringert werden zur Reduzierung der Steifigkeit. Dadurch kann beispielsweise die Federkraft der vorangehend erwähnten Federelemente eingestellt und angepasst werden.
Ein als Blechformteil, vorzugsweise aus Stahlblech oder Federstahlblech ausgebildetes Übertragungselement kann Teilbereiche aufweisen, in denen die Materialeigenschaften von den übrigen Bereichen abweichend ausgestaltet sind. Die Teilbereiche können beispielsweise eine größere oder geringere Härte aufweisen. Eine derartige Einstellung der Materialeigenschaften kann beispielsweise durch eine lokale thermische Behandlung erfolgen, wie beispielsweise mittels Laserstrahlhärten. Dadurch ist es beispielsweise möglich, die Haltekraft des Befestigungsmittels auf der Lenkspindel durch lokale Veränderung der Härte einzustellen.

Mindestens ein Betätigungsmittel - beispielsweise umfassend radiale und/oder axiale Einformungen, Ausnehmungen und/oder Vorsprünge - kann ebenfalls einstückig als Blechformteil mit dem Übertragungselement gebildet werden. Alternativ kann die Fertigung als Press- oder Gussteil ebenfalls einstückig mit einem oder mehreren Befestigungselementen erfolgen. Das Übertragungselement kann alternativ als Kunststoffformteil ausgebildet sein. Die Fertigung als Spritzgussteil bietet eine große Gestaltungsfreiheit hinsichtlich der einteiligen Formgebung, so dass erfindungsgemäße Befestigungsmittel und gegebenenfalls auch Betätigungsmittel problemlos einstückig integriert werden können. Eine ausreichende Haltbarkeit kann durch die Auswahl von Kunststoffen mit entsprechenden Materialeigenschaften realisiert werden, wobei zur Erhöhung der Festigkeit Verstärkungsfasern zugesetzt werden können, wie beispielsweise Glas- oder Kohlefasern. Dadurch kann ein besonders leichter Aufbau realisiert werden.

Die Schnittstelle umfasst bevorzugt einen Aufnahmeabschnitt an der Manteleinheit, der in axialer Richtung benachbart zum Übertragungselement angeordnet ist. Der Aufnahmeabschnitt kann beispielsweise einen koaxial zur Lenkspindel angeordneten zylindrischen oder prismenförmigen Bereich umfassen, auf den der Lenkstockschalter, auch gleichbedeutend als Lenkstockschalter-Modul bezeichnet, mit einer bezüglich Form und Abmessungen korrespondierenden Aufnahme in axialer Richtung anbringbar ist. Zur Montage auf die bereits im Kraftfahrzeug verbaute Lenksäule wird das Lenkstockschalter-Modul vor der Anbringung des Lenkrads von dem lenkradseitigen, hinteren Ende auf dem Aufnahmeabschnitt der Manteleinheit angebracht und fixiert, beispielsweise durch eine Verrastung, Verschraubung oder Verklemmung. Um eine eindeutige Orientierung bezüglich der Lenkachse sicherzustellen, sind der Aufnahmeabschnitt und die korrespondierende Aufnahme am Lenkstockschalter mit Formschlusselementen versehen, die nur in einer definierten Drehposition bezüglich der Lenkachse zusammengefügt werden können. Um die Montage des Lenkstockschalters zu vereinfachen, kann eine Montagehilfe in Form einer profilierten Hülse auf das lenkradseitige Ende der Lenkspindel aufgesteckt werden. Die Montagehilfe umfasst einen Führungskanal, welcher ausgehend vom lenkradseitigen Ende der Lenkspindel hin zum Betätigungsmittel des Übertragungselements verläuft. Bevorzugt verengt sich der Führungskanal ausgehend vom lenkradseitigen Ende der Lenkspindel hin zum Betätigungsmittel des Übertragungselement, so dass eine Art Einführtrichter geschaffen wird.
Ein erfindungsgemäßes Verfahren zur Herstellung einer Lenksäule für ein Kraftfahrzeug, mit einer in einer Manteleinheit drehbar gelagerten Lenkspindel und einer Schnittstelle zur Anbringung eines relativ zur Manteleinheit feststehenden Lenkstockschalters, und mit einem Übertragungselement, welches über Befestigungsmittel mit der Lenkspindel drehmomentschlüssig verbunden ist und zumindest ein Betätigungsmittel aufweist, welches in Wirkeingriff bringbar ist mit dem an der Schnittstelle angebrachten Lenkstockschalter, sieht vor,
dass das Übertragungselement, welches zusammen mit mindestens einem Befestigungsmittel zur Verbindung mit der Lenkspindel einteilig ausgebildet ist, in axialer Richtung auf der Lenkspindel angebracht und ohne zusätzliche Verbindungsmittel unmittelbar drehfest auf der Lenkspindel selbsthaltend fixiert wird.

Im Gegensatz zum Stand der Technik, bei dem ein zunächst separates Verbindungsmittel zunächst mit dem Übertragungselement verbunden werden muss, und bei der Montage das Übertragungselement auf der Lenkspindel durch Verspannung des Verbindungsmittels fixiert werden muss, wird das erfindungsgemäße Übertragungselement einstückig gefertigt, bereitgestellt und in einem Fertigungsschritt axial auf die Lenkspindel aufgesteckt. Dank der einstückigen Ausbildung der Befestigungsmittel erübrigen sich weitere Arbeitsschritte. Dadurch ist die Fertigung einer Lenksäule rationeller möglich.

Beispielsweise kann das Übertragungselement mit dem Befestigungsmittel reibschlüssig in axialer Richtung auf den Befestigungsabschnitt der Lenkspindel aufgepresst werden. Alternativ oder zusätzlich können ein oder mehrere an dem Befestigungsmittel des Übertragungselements ausgebildete Formschlusselemente mit korrespondierenden Formschlussaufnahmen an dem Übertragungselement in axialer Richtung in Eingriff gebracht werden.

Zur Fertigstellung der Lenksäule kann nach dem Fixieren des Übertragungselements an der Schnittstelle der Manteleinheit mittelbar oder unmittelbar ein Lenkstockschalter angebracht werden, wobei ein Betätigungsmittel des Übertragungselements in Betätigungseingriff mit dem Lenkstockschalter gebracht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule mit einem daran angebrachten Lenkstockschalter in einer schematischen perspektivischen Darstellung,
- Figur 2: eine Detailansicht der Lenksäule aus Figur 1,
- Figur 3: die Lenksäule gemäß Figur 1 in axial auseinander gezogenem Zustand,
- Figur 4: die Lenksäule gemäß Figur 1 in einer axialen Ansicht auf das hintere Ende,
- Figur 5: einen teilweisen Längsschnitt in Richtung der Längsachse durch die Lenksäule gemäß Figur 1,
- Figur 6: eine schematische perspektivische Ansicht einer Lenkspindel in einer ersten Ausführungsform,
- Figur 7: eine axiale Ansicht der Lenkspindel gemäß Figur 6,
- Figur 8: eine schematische perspektivische Ansicht einer Lenkspindel in einer zweiten Ausführungsform,
- Figur 9: das Übertragungselement der Lenkspindel aus Figur 8 in abgenommenem Zustand,
- Figur 10: das Übertragungselement gemäß Figur 9 in auseinander gezogenem Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

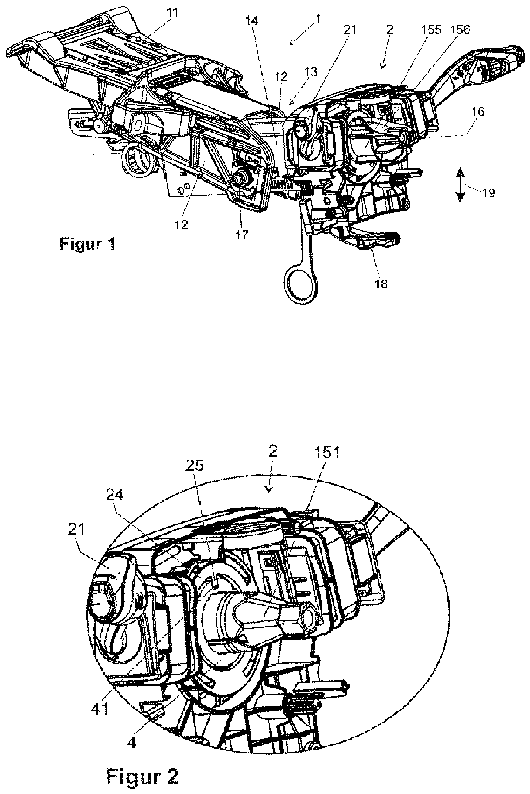

Figur 1 zeigt eine erfindungsgemäße Lenksäule 1 in einer perspektivischen Ansicht schräg auf das hintere Ende, auf dem im Fahrzeug ein hier nicht dargestelltes Lenkrad montiert ist.
Über die Halteeinheit 11 kann die Lenksäule 1 an einer hier nicht dargestellten Fahrzeugkarosserie befestigt werden. Die Halteeinheit 11 weist zwei nach unten stehende Seitenschenkel 12 auf, zwischen denen das äußere Mantelrohr 14 einer Stelleinheit 13 angeordnet ist. In dem Mantelrohr 14 ist eine Lenkspindel 15 um ihre Längsachse 16 drehbar gelagert. Am hinteren Endbereich der Lenkspindel 15 ist ein Abschnitt 151 zur Anbringung eines nicht dargestellten Lenkrads ausgebildet.
Mittels einer Spanneinrichtung, die eine durch beide Seitenschenkel 12 quer zur Längsachse 16 durchgehende Spannachse 17 aufweist, können die Seitenschenkel 12 durch manuelle Bewegung eines Betätigungshebels 18 von außen gegen das Mantelrohr 14 angedrückt und damit verspannt werden. Verschiedene Bauformen von Spanneinrichtungen, die eine Drehbewegung des Betätigungshebels 18 umsetzen, um über die Spannachse 17 die Seitenschenkel gegeneinander zu ziehen, sind im Stand der Technik bekannt, beispielsweise als Nocken- oder Kippstift-Klemmeinrichtungen. Im festgestellten Zustand der Spanneinrichtung ist das Mantelrohr 14 zwischen den Seitenschenkeln 12 eingeklemmt und damit die Stelleinheit 13 kraft- und/oder formschlüssig mit der Halteeinheit 11 verbunden, so dass die Lenkradposition im Fahrzeuginnenraum fixiert ist. In gelöstem Zustand der Spanneinrichtung ist die Klemmverbindung zur Halteeinheit 11 gelöst, so dass die Stelleinheit 13 relativ zur Halteeinheit 11 in Richtung der Längsachse 16 verstellbar ist, und zumeist auch quer dazu in Höhenrichtung 19.

Auf der Stelleinheit 13 ist ein Lenkstockschalter 2 angebracht, der als Lenkstockschalter-Modul ausgebildet ist, das in der Regel eine Mehrzahl von elektrischen Schalteinrichtungen in sich vereint, in der dargestellten Ausführung beispielsweise einen Blinkerschalter 21 mit einem manuell betätigbaren Schalthebel, und beispielsweise einem Fahrlichtschalter, ebenfalls mit einem Schalthebel.

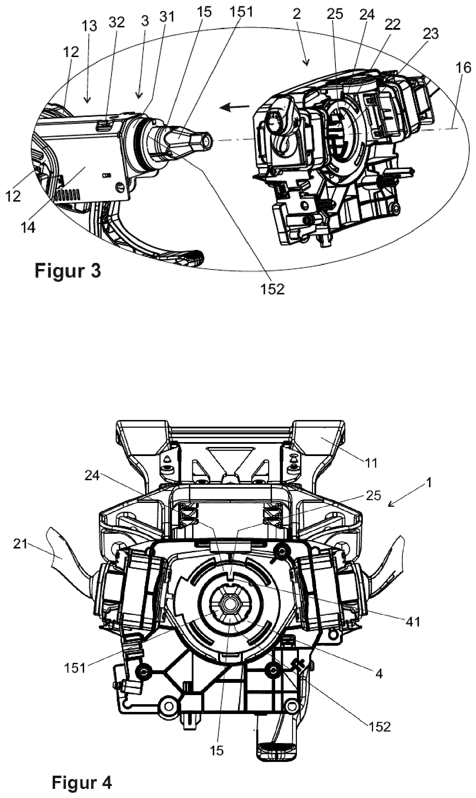

Figuren 2 und 3 zeigen Detailansichten der Lenksäule 1, wobei Figur 3 eine auseinander gezogene Ansicht vor der Montage zeigt. Der Lenkstockschalter 2 weist eine durchgehende Befestigungsöffnung 22 auf, die zur Montage von hinten parallel zur Längsachse 16 auf eine an der Stelleinheit 13 ausgebildeten Schnittstelle 3 aufgesetzt wird, wie dies in Figur 3 mit dem Pfeil angedeutet ist. Die Schnittstelle 3 weist im dargestellten Beispiel einen zylindrischen Aufnahmeabschnitt 31 an dem Mantelrohr 14 auf, der koaxial formschlüssig in einen korrespondierenden hohlzylindrischen Gegenabschnitt 23 in der Befestigungsöffnung 22 einsetzbar ist. Weiterhin können an dem Mantelrohr 12 Montageöffnungen 32 vorgesehen sein, welche über korrespondierende Montageelemente mit dem Lenkstockschalter 2 verbunden werden können.

Auf einem Befestigungsabschnitt 152 der Lenkspindel 15 ist im Bereich der Schnittstelle 3 ein erfindungsgemäßes Übertragungselement 4 drehfest angebracht. Das Übertragungselement 4 befindet sich in Richtung der Längsachse 16 benachbart zum Aufnahmeabschnitt 31, so dass es zusammen mit der Lenkspindel 15 relativ zum Aufnahmeabschnitt 31 um die Längsachse 16 drehbar ist.

Der Lenkstockschalter 2 weist eine Mehrzahl von manuell bedienbaren elektrischen Schaltelementen auf, darunter den Blinkerschalter 21.

Im Bereich der Durchgangsöffnung 22 weist der Lenkstockschalter 2 ein Mitnehmerelement 24 auf, welches sich bei dem in Figur 2 gezeigten Montagezustand im Bereich der Schnittstelle 3 befindet, so dass es in drehmomentschlüssigen Wirkeingriff steht mit dem Übertragungselement 4. Hierzu kann das Mitnehmerelement 24 einen radial nach innen in die Durchgangsöffnung 22 vorstehenden Zapfen 25 aufweisen, der bezüglich der Umfangsrichtung formschlüssig in ein korrespondierendes Betätigungsmittel des Übertragungselements 4 eingreift, welches im dargestellten Beispiel als radiale Einformung 41 im Außenumfang des Übertragungselements 4 ausgebildet ist. Zur Verbeserung der Montage des Lenkstockschalters 2 kann eine Montagehilfe 155 in Form einer aus Kunststoff ausgebildeten profilierten Hülse verwendet werden, wobei die Montagehilfe 155 vor der Montage des Lenkstockschalters 2 auf den Abschnitt 151 der Lenkspindel 15 aufgesteckt wird. Die Montagehilfe 155 umfasst einen ausgehend vom lenkradseitigen Ende der Lenkspindel sich verengenden Führungskanal 156. Der Führungskanal 156 führt den Zapfen 25 des Lenkstockschaltermoduls 2 während der Montage zur Einformung 41 des Übertragungselements 4. Somit dient der Führungskanal 156 als Einführhilfe für die Kopplung zwischen dem Zapfen 25 und der Einformung 41. Somit kann die Montage sicher und einfach ausgeführt werden. Nach der Montage des Lenkstockschalters kann die Montagehilfe 155 einfach vom Abschnitt 151 der Lenkspindel 15 entfernt werden und anschließend das Lenkrad montiert werden.

Das Mitnehmerelement 24 dient als Auslöser für eine im Einzelnen nicht dargestellte Rückstelleinrichtung des Blinkerschalters 21. Die Rückstelleinrichtung deaktiviert den eingeschalteten Blinkerschalter 21 selbsttätig bei Rückdrehung der Lenkspindel 15 nach einem Abbiegemanöver.

Figur 4 zeigt den montierten Zustand aus Figur 2 noch einmal in einer axialen Ansicht von hinten. Darin ist erkennbar, wie das Mitnehmerelement 24 mit dem Zapfen 25 radial in die Einformung 41 eingreift und dadurch drehmomentschlüssig mit dem Übertragungselement 4 verbunden ist.

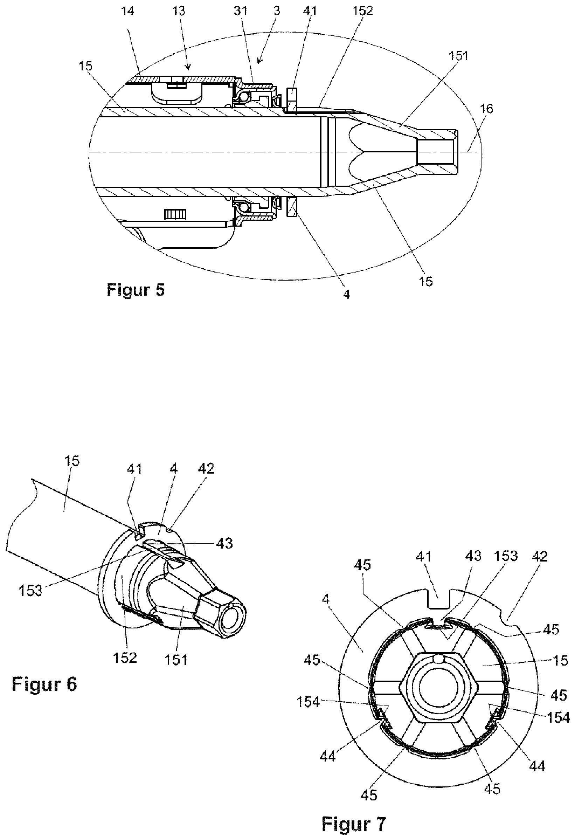

In Figur 5 ist ein Längsschnitt durch die Stelleinheit 13 im Bereich der Schnittstelle 3 dargestellt. Daraus geht hervor, wie das Übertragungselement 4 auf dem Befestigungsabschnitt 152 der Lenkspindel 15 axial benachbart zum Aufnahmeabschnitt 31 des Mantelrohrs 14 angebracht ist. Die Kopplung zwischen dem Mantelrohr 14 und dem Lenkstockschalter 2 erfolgt jedoch nicht ausschließlich über den Aufnahmeabschnitt 31.

In einer nicht dargestellten Ausführungsform ist der Lenkstockschalter an einem zur Längsachse der Lenkspindel orthogonal ausgerichteten und an dem Mantelrohr befestigten Blechplatte befestigt. Ebenfalls sind andere Schnittstellen zwischen dem Mantelrohr und dem Lenkstockschalter denkbar und möglich und hinreichend aus dem Stand der Technik bekannt.

Die konkrete Gestaltung des erfindungsgemäßen Übertragungselements 4 wird zusammen mit den Darstellungen in Figur 6 und 7 deutlich. Demnach ist diese Ausführung des Übertragungselements 4 ringförmig ausgebildet und hat die Grundform eines flachen Kreisringes bzw. einer Ringscheibe, die dich parallel zu einer Radialebene der Lenkspindel 15 erstreckt.

Diese Ausführung des Übertragungselements kann beispielsweise als Blech-Stanzteil ausgebildet sein, bevorzugt aus Stahlblech.

Wie oben bereits erwähnt weist das Übertragungselement 4 in seinem Außenumfang eine radiale Einformung 41 auf, welche ein Betätigungsmittel bildet zur drehmomentschlüssigen Kupplung mit dem Mitnehmerelement 24 des Blinkerschalters 21. Es kann mindestens eine weitere Ausnehmung 42 vorgesehen sein, gegebenenfalls auch mehrere, beispielsweise zur Betätigung von korrespondierenden Schaltelementen oder dergleichen. Die Ausnehmung 42 kann ebenfalls als Orientierungshilfe während der Montage des Übertragungselements 4 auf der Lenkspindel 15 dienen.

Zur drehfesten, das heißt drehmomentschlüssigen Befestigung auf der Lenkspindel 15 hat das Übertragungselement 4 eine radial in seine Ringöffnung vorstehendes Formschlusselement 43, das in die korrespondierende Längsnut 153 im Befestigungsabschnitt 152 formschlüssig eingreift. Zusätzlich können weitere Formschlusselemente 44 vorgesehen sein, welche in Längsnuten 154 eingreifen.

Weiterhin können die Befestigungsmittel Zentriervorsprünge 45 umfassen, die ebenfalls radial nach innen in den offenen Ringquerschnitt vorstehen. Bevorzugt ist eine Mehrzahl, im gezeigten Beispiel sechs, der Zentriervorsprünge 45 über den Umfang verteilt angeordnet. Die Zentriervorspünge 45 greifen nicht formschlüssig ein, sondern stützen sich in radialer Richtung auf dem zylindrischen Außenumfang der Lenkspindel 15 ab, und können als Kraftschlusselemente für eine reibschlüssige Verbindung sorgen.

Die Formschlusselemente 43, 44 und die Zentriervorsprünge 45 bilden erfindungsgemäße Befestigungsmittel, die einstückig mit dem Übertragungselement 4 ausgebildet sind. Das in seiner Grundform ringscheibenförmige Übertragungselement 4 kann als Blech-Stanzteil ausgebildet sein, bevorzugt aus Stahlblech.

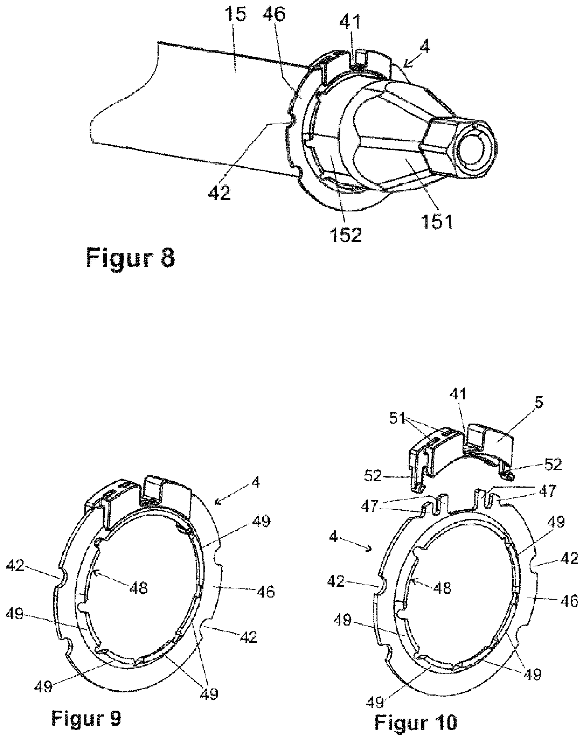

Eine weitere Ausführungsform eines erfindungsgemäßen Übertragungselements 4 ist in den Figuren 8, 9 und 10 dargestellt. Dieses weist ebenfalls eine flache Ringscheibe 46 auf, welche in ihrem Außenumfang Einformungen 42 aufweist. Anstelle der Einformung 41 der ersten Ausführung sind hierbei Eingriffselemente 47 vorgesehen, auf denen in radialer Richtung ein Adapterstück 5 anbringbar ist, welches seinerseits die Einformung 41 aufweist zur Ankopplung an das Mitnehmerelement 24 des Lenkstockschalters 2.

Zur Verbindung mit dem Übertragungselement 4 weist das Adapterstück Verbindungsöffnungen 51 auf, in welche die Eingriffselemente 47 zur Positionierung und Halterung des Adapterstücks 5 aufnehmbar sind. Weiterhin umfasst es in axialer Richtung federnde Rastelemente 52, welche axial in Eingriff bringbar sind mit der Durchgangsöffnung der Ringscheibe 46, so dass das Adapterstück 5 sicher auf dem Übertragungselement 4 verrastet ist.

An der Ringscheibe 46 ist eine rohrabschnittförmige, konisch zusammenlaufende Befestigungshülse 48, die über ihren Umfang mehrfach geschlitzt ist zur Bildung einer Mehrzahl von segmentförmigen Federelementen 49. Der innerhalb dieser Federelemente 49 gebildete Durchgangsquerschnitt ist so bemessen, dass die Befestigungshülse 48 auf den Befestigungsabschnitt 152 der Lenkspindel 15 axial aufgepresst werden kann, wobei die Federelemente 49 durch ihre Federkraft eine kraftschlüssige Verbindung des Übertragungselements 4 mit der Lenkspindel 15 bewirken, d.h. Kraftschlusselemente zur reibschlüssigen Verbindung und damit Befestigungsmittel im Sinne der Erfindung bilden.

Erfindungsgemäß sind die Federelemente 49 einstückig mit dem Übertragungselement 4 ausgebildet. Bevorzugt ist die zweite dargestellte Ausführung des Übertragungselements 4 ebenfalls als Blechformteil ausgebildet, bevorzugt als kalt umgeformtes Press- und Stanzteil aus Stahlblech oder Federstahlblech.

Das optional vorgesehene Adapterteil 5 kann beispielsweise als Kunststoff-Spritzgussteil ausgebildet sein, welches sich günstig fertigen lässt und eine besonders einfache konstruktive Anpassung eines erfindungsgemäß einteiligen Übertragungselements 4 an unterschiedliche Typen von Lenksäulen 1 bzw. Ausführungen von Lenkstockschaltern 2 ermöglicht.

Die erfindungsgemäße Lösung ist nicht auf eine Lenksäule, die manuell in Höhen- und/oder Längsrichtung verstellbar ist, beschränkt. Vielmehr kann die erfindungsgemäße Lösung beispielweise auch bei motorisch verstellbaren oder nicht-verstellbaren Lenksäulen zum Einsatz kommen.

**Bezugszeichenliste**

| | | | |
|---|---|---|---|
| 1 | Lenksäule | 23 | Gegenabschnitt |
| 11 | Halteeinheit | 24 | Mitnehmerelement |
| 12 | Seitenschenkel | 25 | Zapfen |
| 13 | Stelleinheit | 3 | Schnittstelle |
| 14 | Mantelrohr | 31 | Aufnahmeabschnitt |
| 15 | Lenkspindel | 32 | Montageöffnung |
| 151 | Abschnitt | 4 | Übertragungselement |
| 152 | Befestigungsabschnitt | 41 | Einformung |
| 153 | Längsnut | 42 | Ausnehmung |
| 154 | Längsnut | 43 | Formschlusselement |
| 155 | Montagehilfe | 44 | Formschlusselement |
| 156 | Führungskanal | 45 | Zentriervorsprung |
| 16 | Längsachse | 46 | Ringscheibe |
| 17 | Spannachse | 47 | Eingriffselement |
| 18 | Betätigungshebel | 48 | Befestigungshülse |
| 19 | Höhenrichtung | 49 | Federelementen |
| 2 | Lenkstockschalter | 5 | Adapterstück |
| 21 | Blinkerschalter | 51 | Verbindungsöffnung |
| 22 | Befestigungsöffnung | 52 | Rastelement |

## Patentansprüche

1. Lenksäule (1) für ein Kraftfahrzeug, mit einer in einer Manteleinheit (14) drehbar gelagerten Lenkspindel (15) und einer Schnittstelle (3) zur Anbringung eines relativ zur Manteleinheit (14) feststehenden Lenkstockschalters (2), und mit einem Übertragungselement (4), welches über ein Befestigungsmittel mit der Lenkspindel (15) drehmomentschlüssig verbunden ist und zumindest ein Betätigungsmittel (41) aufweist, welches in Wirkeingriff bringbar ist mit dem an der Schnittstelle (3) angebrachten Lenkstockschalter (2),
**dadurch gekennzeichnet,**
**dass** das Übertragungselement (4) zusammen mit mindestens einem Befestigungsmittel (43, 44, 45, 48) zur drehfesten Verbindung mit der Lenkspindel (15) einteilig ausgebildet ist.

2. Lenksäule nach einem der vorangehenden Ansprüche, **dadurch gekennzeichnet, dass** das Befestigungsmittel zumindest ein Formschlusselement (43, 44) aufweist, das in eine korrespondierende Formschlussaufnahme (153, 154) der Lenkspindel (15) eingreift.

3. Lenksäule nach einem der vorangehenden Ansprüche, **dadurch gekennzeichnet, dass** das Befestigungsmittel zumindest ein Kraftschlusselement aufweist, welches reibschlüssig (45, 49) mit der Lenkspindel (15) verbunden ist.

4. Lenksäule nach einem der vorangehenden Ansprüche, **dadurch gekennzeichnet, dass** das Befestigungsmittel mindestens ein Federelement (49) aufweist.

5. Lenksäule nach Anspruch 1, **dadurch gekennzeichnet, dass** das Übertragungselement (4) ringförmig ausgebildet ist und die Lenkspindel (15) in Umfangsrichtung zumindest teilweise umgreift.

6. Lenksäule nach einem der vorangehenden Ansprüche, **dadurch gekennzeichnet, dass** das Befestigungsmittel eine rohrabschnittförmige Befestigungshülse (48) aufweist.

7. Lenksäule nach einem der vorangehenden Ansprüche, **dadurch gekennzeichnet, dass** das Übertragungselement (4) als Blechformteil ausgebildet ist.

8. Lenksäule nach einem der vorangehenden Ansprüche, **dadurch gekennzeichnet, dass** die Schnittstelle (3) einen Aufnahmeabschnitt (31) an der Manteleinheit (14) umfasst, der in axialer Richtung benachbart zum Übertragungselement (4) angeordnet ist.

9. Verfahren zur Herstellung einer Lenksäule (1) für ein Kraftfahrzeug, mit einer in einer Manteleinheit (14) drehbar gelagerten Lenkspindel (15) und einer Schnittstelle (3) zur Anbringung eines relativ zur Manteleinheit (14) feststehenden Lenkstockschalters (2), und mit einem Übertragungselement (4), welches über Befestigungsmittel mit der Lenkspindel (15) drehmomentschlüssig verbunden ist und zumindest ein Betätigungsmittel (41) aufweist, welches in Wirkeingriff bringbar ist mit dem an der Schnittstelle (3) angebrachten Lenkstockschalter (2),
**dadurch gekennzeichnet,**
**dass** das Übertragungselement (4), welches zusammen mit mindestens einem Befestigungsmittel (43, 44, 45, 48) zur Verbindung mit der Lenkspindel (15) einteilig ausgebildet ist, in axialer Richtung auf der Lenkspindel (15) angebracht und ohne zusätzliche Verbindungsmittel unmittelbar drehfest auf der Lenkspindel (15) selbsthaltend fixiert wird.

10. Verfahren nach Anspruch 9, **dadurch gekennzeichnet, dass** nach dem Fixieren des Übertragungselements (4) an der Schnittstelle (3) der Manteleinheit (14)mittelbar oder unmittelbar ein Lenkstockschalter (2) angebracht wird, wobei ein Betätigungsmittel (41) des Übertragungselements (4) in Betätigungseingriff mit dem Lenkstockschalter (2) gebracht wird.

## Claims

1. Steering column (1) for a motor vehicle, having a steering spindle (15) which is mounted rotatably in a casing unit (14), and having an interface (3) for attaching a steering column switch (2) which is fixed relative to the casing unit (14), and having a transmission element (4) which is connected in a torque-transmitting manner to the steering spindle (15) via a fastening means and comprises at least one actuating means (41) which can be brought into operative engagement with the steering column switch (2) which is attached to the interface (3), **characterized in that** the transmission element (4) is configured in one piece together with at least one fastening means (43, 44, 45, 48) for connecting fixedly to the steering spindle (15) so as to rotate with it.

2. Steering column according to one of the preceding claims, **characterized in that** the fastening means comprises at least one positively locking element (43, 44) which engages into a corresponding positively locking receptacle (153, 154) of the steering spindle (15).

3. Steering column according to one of the preceding claims, **characterized in that** the fastening means comprises at least one non-positive element which is connected to the steering spindle (15) in a frictionally locking manner (45, 49).

4. Steering column according to one of the preceding claims, **characterized in that** the fastening means comprises at least one spring element (49).

5. Steering column according to Claim 1, **characterized in that** the transmission element (4) is of annular configuration and engages at least partially around the steering spindle (15) in the circumferential direction.

6. Steering column according to one of the preceding claims, **characterized in that** the fastening means comprises a tubular section-shaped fastening sleeve (48).

7. Steering column according to one of the preceding claims, **characterized in that** the transmission element (4) is configured as a shaped sheet metal part.

8. Steering column according to one of the preceding claims, **characterized in that** the interface (3) comprises a receiving section (31) on the casing unit (14), which receiving section (31) is arranged adjacently in the axial direction with respect to the transmission element (4).

9. Method for producing a steering column (1) for a motor vehicle, having a steering spindle (15) which is mounted rotatably in a casing unit (14), and having an interface (3) for attaching a steering column switch (2) which is fixed relative to the casing unit (14), and having a transmission element (4) which is connected in a torque-transmitting manner to the steering spindle (15) via a fastening means and comprises at least one actuating means (41) which can be brought into operative engagement with the steering column switch (2) which is attached to the interface (3), **characterized in that** the transmission element (4) which is configured in one piece together with at least one fastening means (43, 44, 45, 48) for connecting to the steering spindle (15) is attached on the steering spindle (15) in the axial direction and is fixed in a self-locking manner without additional connecting means directly on the steering spindle (15) so as to rotate with it.

10. Method according to Claim 9, **characterized in that**, after the fixing of the transmission element (4), a steering column switch (2) is attached indirectly or directly to the interface (3) of the casing unit (14), an actuating means (41) of the transmission element (4) being brought into actuating engagement with the steering column switch (2).

## Revendications

1. Colonne de direction (1) pour un véhicule à moteur, avec un arbre de direction (15) supporté de façon rotative dans une unité d'enveloppe (14) et une interface (3) pour la pose d'un commutateur de colonne de direction (2) fixe par rapport à l'unité d'enveloppe (14), et avec un élément de transmission (4), qui est relié par un moyen de fixation à l'arbre de direction (15) pour transmission de couple et qui présente au moins un moyen d'actionnement (41), qui peut être mis en liaison active avec le commutateur de colonne de direction (2) installé à l'interface (3), **caractérisée en ce que** l'élément de transmission (4) est réalisé d'une pièce avec ledit au moins un moyen de fixation (43, 44, 45, 48) pour l'assemblage calé en rotation avec l'arbre de direction (15).

2. Colonne de direction selon l'une quelconque des revendications précédentes, **caractérisée en ce que** le moyen de fixation présente au moins un élément d'assemblage par emboîtement (43, 44), qui s'engage dans un logement d'emboîtement correspondant (153, 154) de l'arbre de direction (15).

3. Colonne de direction selon l'une quelconque des revendications précédentes, **caractérisée en ce que** le moyen de fixation présente au moins un élément d'assemblage par serrage, qui est assemblé par friction (45, 49) à l'arbre de direction (15).

4. Colonne de direction selon l'une quelconque des revendications précédentes, **caractérisée en ce que** le moyen de fixation présente au moins un élément de ressort (49).

5. Colonne de direction selon la revendication 1, **caractérisée en ce que** l'élément de transmission (4) est réalisé sous forme annulaire et entoure l'arbre de direction (15) au moins en partie en direction périphérique.

6. Colonne de direction selon l'une quelconque des revendications précédentes, **caractérisée en ce que** le moyen de fixation présente une douille de fixation (48) en forme de partie de tube.

7. Colonne de direction selon l'une quelconque des revendications précédentes, **caractérisée en ce que** l'élément de transmission (4) est formé par une pièce façonnée en tôle.

8. Colonne de direction selon l'une quelconque des revendications précédentes, **caractérisée en ce que** l'interface (3) comprend une partie de logement (31) sur l'unité d'enveloppe (14), qui est disposée en direction axiale à proximité de l'élément de transmission (4).

9. Procédé de fabrication d'une colonne de direction (1) pour un véhicule à moteur, avec un arbre de direction (15) supporté de façon rotative dans une unité d'enveloppe (14) et une interface (3) pour la pose d'un commutateur de colonne de direction (2) fixe par rapport à l'unité d'enveloppe (14), et avec un élément de transmission (4), qui est relié par un moyen de fixation à l'arbre de direction (15) pour transmission de couple et qui présente au moins un moyen d'actionnement (41), qui peut être mis en liaison active avec le commutateur de colonne de direction (2) installé à l'interface (3), **caractérisé en ce que** l'on pose l'élément de transmission (4), qui est réalisé d'une pièce avec ledit au moins un moyen de fixation (43, 44, 45, 48) pour l'assemblage avec l'arbre de direction (15), en direction axiale sur l'arbre de direction (15) et on le fixe avec auto-serrage sans moyen d'assemblage additionnel directement de façon calée en rotation sur l'arbre de direction (15).

10. Procédé selon la revendication 9, **caractérisé en ce qu'**après la fixation de l'élément de transmission (4) on pose indirectement ou directement un commutateur de colonne de direction (2) à l'interface (3) de l'unité d'enveloppe (14), dans lequel on amène un moyen d'actionnement (41) de l'élément de transmission (4) en engagement d'actionnement avec le commutateur de colonne de direction (2).
